# NEUE EUROPÄISCHE PATENTSCHRIFT

(11) **EP 0 892 288 B2**
(45) Veröffentlichungstag und Bekanntmachung des Hinweises auf die Entscheidung über den Einspruch: **21.01.2009**
(45) Hinweis auf die Patenterteilung: 16.11.2005
(21) Anmeldenummer: 97810506.2
(22) Anmeldetag: 17.07.1997
(51) Int. Cl.: G02B 5/02, B21B 1/22, B21B 27/00, F21V 7/10

(54) **Verwendung eines Walzproduktes aus Metall mit lichtaufweitender Oberflächenstruktur**
Use of a rolled metal product with light diffusing surface structure
Utilisation d'un produit métallique laminé avec structure superficielle diffusant la lumière

(43) Veröffentlichungstag der Anmeldung: 20.01.1999
(73) Patentinhaber: Alcan Technology & Management AG, 8212 Neuhausen am Rheinfall (CH)
(72) Erfinder: Fuchs, Roman, 8200 Schaffhausen (CH); Hotz, Walter, 8222 Beringen (CH)
(74) Vertreter: Wiedmer, Edwin

(56) Entgegenhaltungen:
- EP-A- 0 568 943
- EP-A- 0 714 039
- EP-A- 0 762 152
- WO-A-96/08629
- AU-B- 475 784
- DE-A- 2 541 420
- DE-U- 29 620 783
- GB-A- 1 481 938
- US-A- 5 582 863
- PATENT ABSTRACTS OF JAPAN vol. 007, no. 042 (P-177), 19.Februar 1983 -& JP 57 192940 A (NITSUKOU ENGINEERING KK), 27.November 1982,
- PATENT ABSTRACTS OF JAPAN vol. 096, no. 005, 31.Mai 1996 -& JP 08 024902 A (KAWAI MUSICAL INSTR MFG CO LTD), 30.Januar 1996,

## Beschreibung

Die Erfindung betrifft die Verwendung eines Walzprodukt aus Metall mit wenigstens einer strukturierten Oberfläche mit lichtaufweitender Struktur für Lichtrettektoren.

In der heutigen Lichttechnik werden für die hochwertige Beleuchtung von Arbeitsplätzen Spiegelrasterleuchten verwendet, die einen Reflektor aus einem hochglänzenden Aluminiumwerkstoff aufweisen. Insbesondere Computerarbeitsplätze benötigen speziell entblendete Leuchten aus hochglänzenden Aluminiumreflektoren, sogenannte BAP-Leuchten, die das Licht korrekt nach unten lenken und ausserhalb von etwa 45% nur wenig Streulicht (< 200 Candela/m² nach DIN 5035) abgeben.

Bei vielen Neuentwicklungen wie z.B. Sekundärleuchten, wo die Leuchtquelle nicht mehr direkt gesehen werden kann, stört bei Verwendung von Hochglanzoberflächen die hohe Leuchtdichte der gespiegelten Leuchtquelle. Dieser Effekt wird durch die Einführung der neuen T5-Lampe mit ihren wesentlich höheren Leuchtdichten noch verstärkt. Der Ersatz von Spiegelelementen durch diffuser streuende Oberflächen ist nicht durchführbar, weil dadurch Streulicht entsteht, welches weit weg vom Glanzwinkel gestreut wird, was zu Blendung führt.

Aus der JP-A-57 192 940 ist ein Schirm zur Projektion von Filmen, Dias und TV-Bildern bekannt. Der metallische Schirm weist eine Oberflächenstruktur mit einem Rinnenmuster wellenartigen Querschnitts mit einem Radius r und einer Kreisbogenlänge a auf, wobei zwischen Kreisbogenradius und Kreisbogenlänge die Beziehung 2/3 πr > a > 2/5 πr erfüllt sein muss. Damit ergibt sich für den maximalen Steigungswinkel α einer an die Kreisbogenstücke angelegten Tangente gegenüber einer durch die Oberfläche definierten Ebene die Beziehung 60° > α > 36°. Der bevorzugte maximale Tangentialwinkel α liegt bei 45° und führt zu einem maximalen Streuwinkel eines reflektierten Lichtstrahls von 180°.

Die GB-A-1481938 offenbart einen axialsymmetrischen, konkaven Lichtreflektor, in welchem eine helixförmige Glühwendel, deren Längsachse mit der Symmetrieachse des Reflektors zusammenfällt, angeordnet ist. Die reflektierende innere Oberfläche des Reflektors ist mit einem Rinnenmuster wellenartigen Querschnitts versehen, wobei die Rinnen am inneren Umfang des Reflektors symmetrisch zur Reflektorachse verlaufen. Zur Erzeugung einer gleichmässigen Lichtintensität über den Querschnitt eines reflektierten Lichtstrahls wird der Radius der kreisbogenförmigen Rinnen im Bereich des Scheitelpunktes des Reflektors kleiner gewählt als der Radius eines Kreisbogens im Bereich des grössten Umfangs des Reflektors. Dadurch wird der Teil des von der helixförmigen Glühwendel emittierten und in einem Bereich nahe der Glühwendel reflektierten Lichtstrahls mit einem grösseren Streuwinkel reflektiert als der Teil des Lichtstrahls, der von einem von der Glühwendel weiter entfernten Bereich reflektiert wird.

Aus der DE-U-296 20 783 sind Reflektoren aus Metallblech mit einer durch konkav und/oder konvex aus dem Blech herausgeformte Kugelabschnitte gebildeten strukturierten Oberfläche bekannt. Um vor allem bei schwachen Lichtquellen eine optimale Lichtstreuung zu erzielen, sind die einzelnen Kugelabschnitte voneinander beabstandet. Durch den Randabstand der Kugelabschnitte wird die Lichtstreuung vermindert.

Der Erfindung liegt daher die Aufgabe zugrunde, eine strukturierte Oberfläche mit lichtaufweitender Struktur bereitzustellen, welche das Licht in einem bestimmten Winkel aufweitet, daüber hinaus jedoch wenig Streulicht erzeugt. Zudem soll die Oberfläche einfach, preiswert, rezyklierbar und in industrieller Fertigungsweise herstellbar sein.

Zur erfindungsgemässen Lösung der Aufgabe führt die Verwendung eines Walsproduktes aus Metall mit den Merkmalen deunabhängigen Anspruches 1.

Die Rauheit der strukturierten Oberfläche wird zur Verminderung von diffuser Strahlung auf einen Wert Rₐ von max. 0,1µm, vorzugsweise max. 0,05µm, insbesondere max. 0,02µm begrenzt. Der Wert Rₐ versteht sich nach Abzug der durch die Struktur gegebenen Welligkeit. Die Rauheit Rₐ ist definiert in wenigstens einer der Vorschriften DIN 4761 bis 4768.

Bevorzugt ist ein Steigungswinkel von 4 bis 6°.

Bei der periodischen Struktur liegen die bevorzugten Werte für die Periodenlänge zwischen 0,01 und 10 mm, vorzugsweise zwischen 0,05 und 0,5 mm und besonders bevorzugt zwischen 0,1 und 0,4 mm.

Bei der Struktur sind die Kreisbogenstücke alternierend konvex und konkav geformt.

Die periodische Struktur weist einen einheitlichen Kreisbogenradius auf.

Erfindungsgemäss kann die strukturierte Oberfläche des Walzproduktes Teil eines Bleches, Bandes oder einer Folie sein, wobei die Bleche, Bänder oder Folien aus Metallen und dabei vorzugsweise aus Aluminium oder Aluminiumlegierungen bestehen können oder die Metalle Glänzwerkstoffe aus Aluminium und dessen Legierungen darstellen können. Insbesondere kann Aluminium oder eine Aluminiumlegierung angewendet werden, deren Aluminiumbasismetall einer Reinheit von mehr als 98,3 Gew.-% entspricht.

Besonders günstig sind Walzprodukte nach vorliegender Erfindung, deren strukturierte Oberfläche eine chemisch, elektrolytisch oder mechanisch geglänzte oder anodisierte oder geglänzte und anodisierte strukturierte Oberflächenschicht aufweist.

Günstig ist eine strukturierte Oberfläche, die eine oder mehrere aus dem Vakuum abgeschiedene Schichten aus Metallen, Halbmetallen oder deren Oxide, Nitride, Sulfide oder Fluoride oder Gemische davon, als darüberliegende Schichten, enthält.

Ebenfalls günstig ist eine strukturierte Oberfläche, die eine geglänzte oder anodisierte oder geglänzte und anodisierte strukturierte Oberflächenschicht aufweist und auf dieser Oberflächenschicht eine oder mehrere aus dem Vakuum abgeschiedene Schichten aus Metallen, Halbmetallen oder deren Oxiden, Nitriden, Sulfiden oder Fluoriden oder Gemischen davon, als weitere darüberliegende Schichten, ansgeordnet sind.

Auf der strukturierten Oberfläche oder auf einer Oberflächenschicht kann auch wenigstens eine transparente Kratz- und Korrosionsschutzschicht angeordnet sein.

Auf der strukturierten Oberfläche kann auch wenigstens eine transparente, das Rillenmuster einebnende Schicht mit einem zur Erweiterung der Lichtaufweitung entsprechend gross gewählten optischen Brechungsindex angeordnet sein.

Auch können auf der strukturierten Oberfläche eine Unterzugsschicht und eine oder mehrere aus dem Vakuum abgeschiedene Schichten aus Metallen, Halbmetallen oder deren Oxide, Nitride, Sulfide oder Fluoride oder Gemische davon, als darüberliegende Schichten, angeordnet sein.

Auf der strukturierten Oberflächenschicht kann auch eine Überzugsschicht, die nach dem Plasmapolymerisationsverfahren aufgebracht ist, angeordnet sein.

Auf der strukturierten Oberfläche kann auch eine Unterzugsschicht und eine oder mehrere aus dem Vakuum abgeschiedene Schichten aus Metallen, Halbmetallen oder deren Oxide, Nitride oder Fluoride oder Gemische davon, als darüberliegende Schichten, ausgeordnet sein, und darüberliegend kann eine Überzugsschicht die nach dem Plasmapolymerisationsverfahren aufgebracht ist, angeordnet sein.

Die auf der strukturierten Oberfläche angeordneten Unterzugsschichten können nach dem Plasmapolymerisationsverfahren aufgebracht sein.

Die Oberflächen von Blechen, Bändern oder Folien können mechanisch, elektrolytisch oder chemisch geglänzt sein. Ist die Oberfläche der Bleche, Bänder oder Folien anodisiert, so kann dies durch verschiedene Elektrolyte, wie saure Elektrolyte aus der Reihe der Schwefelsäure-, Phosphorsäure-, Zitronensäure-, Weinsäure-, Chromsäureelektrolyte und Kombinationen daraus, mit einem Gleich- oder Wechselstromverfahren usw. erfolgen. Es ist Stückanodisieren, wie auch Bandanodisieren möglich.

Beispiele von einer Schicht oder von Schichtsystemen aus mehreren Schichten, die aus dem Vakuum auf der strukturierten Oberfläche oder einer bereits darauf abgeschiedenen Oberflächenschicht (Unterzugsschicht) abgeschieden sind, können beispielsweise sein:
- Fallweise wenigstens einer Haftschicht (Schicht A), wie z.B. eine Keramikschicht. Solche Schichten können beispielsweise Verbindungen der Formeln SiOₓ , wobei x eine Zahl von 1 bis 2 ist, oder Al_{y}O_{z,} wobei y/z eine Zahl von 0,2 bis 1,5 darstellt, enthalten oder daraus bestehen. Bevorzugt ist eine Haftschicht enthaltend SiOₓ, wobei x obige Bedeutung hat.
- Eine Lichtreflexionsschicht (Schicht B), z.B. eine metallische Schicht enthaltend oder bestehend aus z.B. Al, Ag, Au, Cu, Cr oder Legierungen, beispielsweise enthaltend wenigstens eines der genannten Elemente.
- Fallweise eine transparente Schutzschicht (Schicht C), z.B. bestehend aus oder enthaltend Oxide, Nitride, Sulfide, Fluoride, usw. von Alkali-, z.B. Li, Na, K, Erdalkali-, z.B. Mg, Ca, Sr, Ba, und/oder Übergangsmetallen, wie z.B. Sc, Ti, V, Cr, Mn, Fe, Co, Ni, Y, Zr, Nb, Mo, Te, Ru, Rh, Pd, Hf, Ta, W, Re, Os, Ir, Pt und/oder Lanthanoiden wie z.B. La, Ce, Pr, Nd, Pm, Dy, Yb oder Lu, usw. Beispiele sind Schichten enthaltend oder bestehend aus PrTi-Oxid und MgF₂ usw. Ferner können statt nur der Schicht C zwei oder mehrere transparente Schichten (Schichten C, D, ...) mit unterschiedlichen Brechungsindices zur Erhöhung des Reflexionsgrades als Folge partieller Lichtreflexion an der Phasengrenze der Schicht C und Schicht D, resp. weiterer Schichten, vorgesehen werden.

Im Falle von mehreren dielektrischen und transparenten Schichten werden die Schichtdicken vorteilhaft derart gewählt, dass das eintreffende Licht an den Phasengrenzen konstruktive Interferenz erfährt (λ/4-Schichten).

Die genannten, aus dem Vakuum abgeschiedenen Schichten weisen beispielsweise Dicken von 5 bis 500 nm für jede einzelne Schicht und die einzelnen Schichten sind vorzugsweise 5 bis 100 nm dick.

Zweckmässig ist eine Schicht B. Bevorzugt ist ein Schichtsystem enthaltend eine Schicht B und eine Schicht C oder ein Schichtsystem enthaltend eine Schicht B, eine Schicht C und eine Schicht D.

Die Schichten können beispielsweise durch Gas- oder Dampfphasenabscheidung im Vakuum (physical vapour deposition, PVD), durch thermische Verdampfung, durch Elektronenstrahlverdampfung, mit und ohne Ionenunterstützung, durch Sputtern, insbesondere durch Magnetronsputtering, oder durch chemische Gasphasenabscheidung (chemical vapour deposition, CVD), mit und ohne Plasmaunterstützung, auf der erfindungsgemässen Oberfläche oder einer bereits aufgebrachten Schicht abgeschieden werden.

Die Schicht oder das Schichtsystem kann in einer Prozessfolge auf die Oberfläche gebracht werden, welche die Schritte der Entfettung und Reinigung der Oberfläche, das Einschleusen des die Oberfläche enthaltenden Gegenstandes in eine Vakuumanlage, das Reinigen beispielsweise durch Sputtern, durch Entladung (glow discharge) etc., gegebenenfalls in erster Stufe die Abscheidung der Haftschicht (Schicht A), in zweiter Stufe die Abscheidung wenigstens einer lichtreflektierenden Schicht, z.B. metallischen Schicht (Schicht B), gegebenenfalls in dritter resp. zweiter und gegebenenfalls vierter resp. dritter Stufe und in weiteren Stufen die Abscheidung wenigstens einer transparenten Schicht (Schicht C, gegebenenfalls Schicht D und weitere) und des Ausschleusens des beschichteten Gegenstandes aus dem Vakuum enthält.

Als Unterzugsschichten oder als Überzugsschichten können beispielsweise organische Lackschichten, PVD- oder CVD-Schichten einer Dicke von beispielsweise 0,5µm und grösser oder mit einem Plasmapolymerisationsverfahren aufgebrachte Schichten zur Anwendung gelangen oder es können Metalloxid und/oder Metallfluorid- bzw. Metallsulfidschichten zur Anwendung gelangen.

Als transparente Kratz- und Korrosionsschutzschichten können beispielsweise organische Lacke oder nach einem Plasmapolymerisationsverfahren aufgebrachte Schichten angewendet werden. Die transparente Kratz- und Korrosionsschutzschicht kann zusätzlich schmutzabweisende Eigenschaften aufweisen.

Die erfindungsgemässe Oberflächenstruktur streut das parallel einfallende Licht in einer Dimension. Durch den Einsatz einer sphärischen Struktur kann das parallel einfallende Licht in zwei Dimensionen gestreut werden.

Bei einem Verfahren zur Herstellung eines Walzproduktes aus Metall mit wenigstens einer strukturierten Oberfläche, wird ein metallischer Körper, wie beispielsweise ein Walzbarren, plattierte Bleche, Bänder oder Folien in einem oder in der Regel in mehreren Walzstichen zwischen wenigstens zwei Walzen zum Walzprodukt geformt.

Das Verfahren wird derart ausgeführt, dass wenigstens eine Walze ein Prägemuster aufweist, und das Prägemuster wenigstens eine Oberfläche des Walzproduktes derart strukturiert, dass sich ein in Walzrichtung über die ganze Walzlänge erstreckendes Rinnenmuster bildet, wobei das Rinnenmuster einen wellenartigen Querschnitt mit einer periodischen Struktur in Form einer Aneinanderreihung von Kreisbogenstücken aufweist, wobei der maximale Steigungswinkel einer an die Kreisbogenstücke angelegten Tangente gegenüber einer durch die Oberfläche definierten Ebene 3 bis 8° beträgt und der Radius der Kreisbogenstücke zwischen 0,1 und 20 mm liegt , wobei die strukturierte Oberfläche eine Rauheit von max 0,1 µm, aufweist.

Zweckmässig ist ein Verfahren zur Herstellung eines Walzproduktes aus Metall mit wenigstens einer strukturierten Oberfläche, wobei ein metallischer Körper in einem oder mehreren Walzstichen zwischen wenigstens zwei Walzen zum Walzprodukt geformt wird
- und dabei die strukturierte Oberfläche aus einem metallischen Körper mit einer geglänzten oder anodisierten oder geglänzten und anodisierten Oberfläche geformt ist,
- oder auf die strukturierte Oberfläche eine oder mehrere aus dem Vakuum abgeschiedene Schichten aus Metallen, Halbmetallen oder deren Oxide, Nitride, Sulfide oder Fluoride oder Gemische davon, als darüberliegende Schichten aufgebracht werden,
- oder die strukturierte Oberfläche aus einem metallischen Körper mit einer geglänzten oder anodisierten oder geglänzten und anodisierten Oberfläche geformt ist und auf dieser Oberfläche eine oder mehrere aus dem Vakuum abgeschiedene Schichten aus Metallen, Halbmetallen oder deren Oxiden, Nitriden, Sulfide oder Fluoriden oder Gemischen davon als weitere darüberliegende Schichten aufgebracht werden,
- oder auf der strukturierten Oberfläche oder auf einer Oberflächenschicht wenigstens eine transparente Kratz- und Korrosionsschutzschicht angebracht wird,
- oder auf der strukturierten Oberfläche wenigstens eine transparente, das Rillenmuster einebnende Schicht mit einem zur Erweiterung der Lichtaufweitung entsprechend gross gewählten optischen Brechungsindex angeordnet ist,
- oder auf der strukturierten Oberflächenschicht eine Unterzugsschicht, welche die Topographie nachzeichnet, und eine oder mehrere aus dem Vakuum abgeschiedene Schichten aus Metallen, Halbmetallen oder deren Oxide, Nitride, Sulfide oder Fluoride oder Gemische davon als darüberliegende Schichten angebracht werden,
- oder auf der strukturierten Oberfläche eine Überzugsschicht angebracht wird,
- oder auf der strukturierten Oberfläche eine Unterzugsschicht und eine oder mehrere aus dem Vakuum abgeschiedene Schichten aus Metallen, Halbmetallen oder deren Oxide, Nitride, Sulfide oder Fluoride oder Gemische davon als darüberliegende Schichten aufgebracht werden und darauf eine Überzugsschicht aufgebracht wird.

Eine spezielle Oberflächenschicht umfasst ein Schichtsystem aus einer Vorbehandlungsschicht mit einer darauf aufgebrachten, funktionellen Beschichtung mit organofunktionellen Silanen einer Metallverbindung sowie einer auf dieser abgeschiedenen metallhaltigen Reflexionsschicht. Ein derartiger Schichtaufbau ist im einzelnen beschrieben in der schweizerischen Patentanmeldung Nr. 2001/76 vom 15.08.96.

Die Walzoperation wird beispielsweise derart ausgeführt, dass ein Rohling gegebener Dicke in einem oder mehreren Durchläufen oder Stichen auf die gewünschte Dicke zwischen einem Walzenpaar oder mehreren Walzen oder Walzenpaaren gewalzt wird, wobei die Oberfläche des Walzproduktes vorzugsweise im letzten Walzenstich strukturiert wird. Vor den letzten Walzstichen kann eine Vorprofilierung des Vorwalzbandes derart erfolgen, dass der Materialfluss im darauffolgenden Walzstich begünstigt, bzw. verkleinert, wird.

Die Walze, welche der Oberfläche des Walzproduktes die beschriebene Struktur verleiht, weist entsprechend die gewünschte Struktur in negativer Form auf. Die strukturierte Walze kann aus den an sich bekannten Werkstoffen aufgebaut sein, wie aus Stahl, vergütetem, gehärtetem oder verchromtem Stahl. Die Negativstruktur kann beispielsweise durch spanabhebende Bearbeitung, Schleifen, Drehen, Polieren, durch Giessen, Laser- oder Elektronenstrahl oder Kombinationen daraus, durch Funkenerosion, durch elektrochemische oder chemische Abtrag- oder Abscheideverfahren usw. erzeugt werden. Das erfindungsgemässe Verfahren wird vorzugsweise mit Bändern oder mit Rollenware kontinuierlich ausgeführt. Die Walzprodukte mit den strukturierten Oberflächen können nach dem Anbringen der strukturierten Oberfläche einem Reck-und/oder Richtprozess unterzogen und in Tafeln, als Bleche oder als Abschnitte beliebiger Grösse abgelängt werden oder die Rollenware kann wieder aufgehaspelt oder aufgewickelt werden.

Es ist beispielsweise möglich, Walzprodukte zu erzeugen, die über deren ganze Breite das Rippenmuster aufweisen. Es ist aber auch möglich, Walzprodukte zu erzeugen, die das Rippenmuster nur auf Teilbereichen ihrer Breite aufweisen. Das Rippenmuster kann beispielsweise in Randberichen oder streifenförmig im Rippenmuster weggelassen werden. Solche Varianten lassen sich beispielsweise durch entsprechend strukturierte Walzen erzeugen.

Der Einsatzbereich der erfindungsgemässen Walzprodukte liegt in der Herstellung von Lichtreflektoren.

Weitere Vorteile, Merkmale und Einzelheiten der Erfindung ergeben sich aus der nachfolgenden Beschreibung sowie anhand der Zeichnung; diese zeigt schematisch in
- Fig. 1 die Lichtindikatrix unterschiedlich strukturierter Oberflächen;
- Fig. 2 a, b Querschnitte durch nicht erfindungsgemässe unterschiedlich strukturierte Oberflächen;

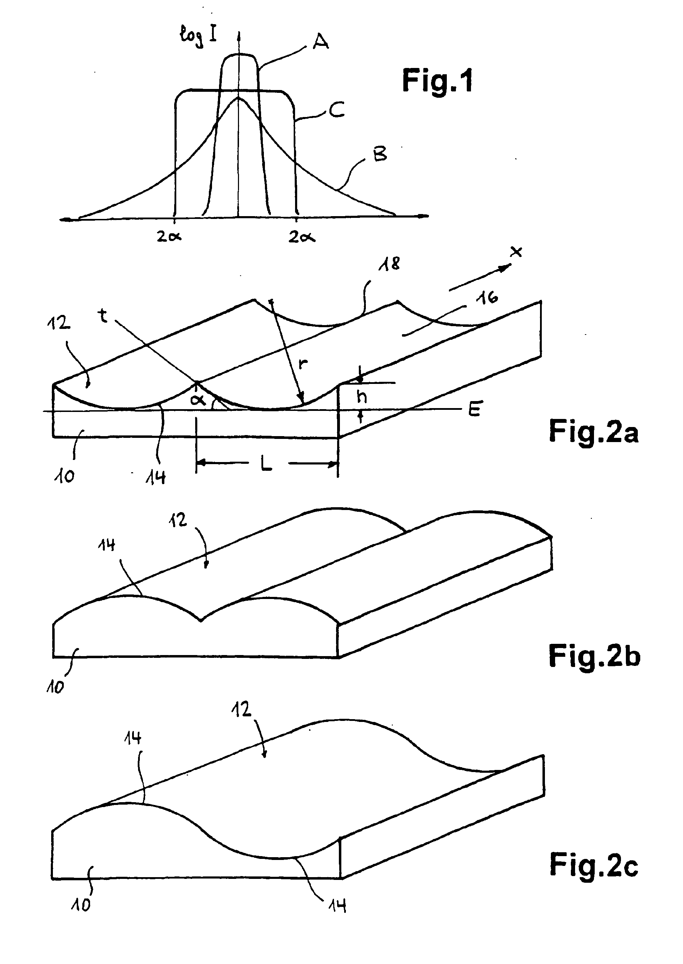

- Fig. 2 c einen Querschnitt durch eine erfindungsgemässe strukturierte Oberfläche;

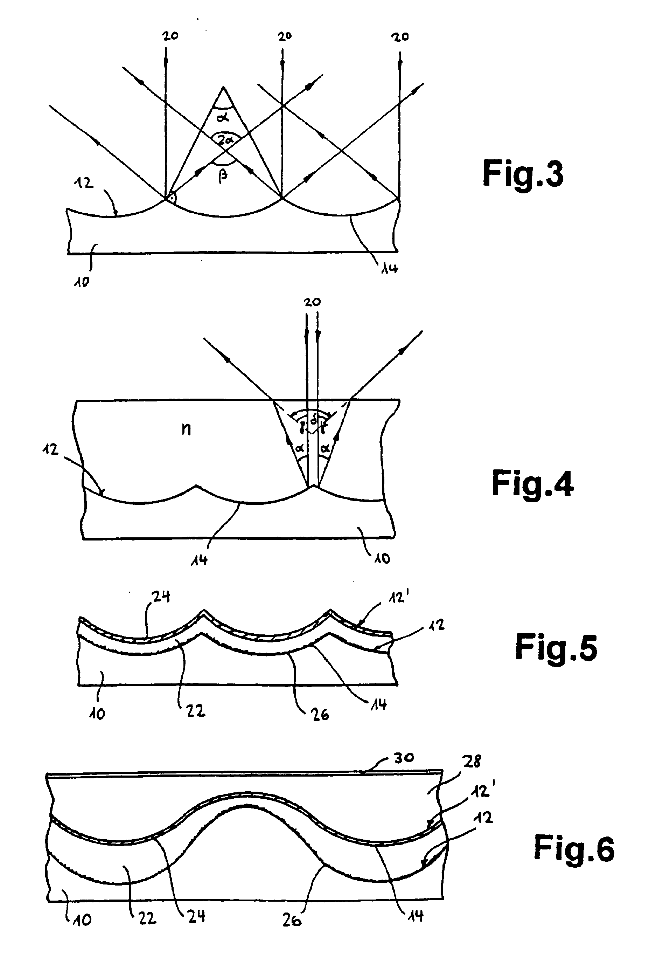

- Fig. 3 das Reflexionsverhalten einer nicht erfindungsgemässen ersten Ausführungsform einer strukturierten Oberfläche;
- Fig. 4 das Reflexionsverhalten einer nicht erfindungsgemässen zweiten Ausführungsform einer strukturierten Oberfläche;
- Fig. 5 das Reflexionsverhalten einer nicht erfindungsgemässen dritten Ausführungsform einer strukturierten Oberfläche;
- Fig. 6 das Reflexionsverhalten einer nicht erfindungsgemässen vierten Ausführungsform einer strukturierten Oberfläche.

Fig. 1 zeigt die Lichtindikatrix für drei unterschiedlich strukturierte Oberflächen in logarithmischer Darstellung. Hierbei entspricht die Kurve A einer handelsüblichen Hochglanzoberfläche, Kurve B einer handelsüblichen matten Oberfläche und Kurve C einer Oberfläche mit der erfindungsgemässen Struktur, die zu einer Strahlverbreiterung bei im wesentlichen gleichbleibender Reflexionsintensität führt.

Fig. 2a-c zeigen drei Walzprodukte 10 mit verschieden strukturierter Oberfläche 12. Das in Walzrichtung x laufende Rinnenmuster weist einen wellenartigen Querschnitt mit periodischer Struktur in Form einer Aneinanderreihung von Kreisbogenstücken 14 auf. Der maximale Steigungswinkel α einer an die Kreisbogenstücke 14 angelegten Tangente t beträgt gegenüber einer durch die Oberfläche 12 definierten Ebene E beispielsweise etwa 6° und die Periodenlänge L weist einen Wert von beispielsweise etwa 0,2 mm auf. Hieraus ergibt sich ein Kreisbogenradius r von etwa 3 mm und eine Höhe h der aus der Ebene E maximal herausragenden Oberflächenstruktur.

Bei der in Fig. 2a angezeigten Ausführungsform einer strukturierten Oberfläche 12 wird diese durch in Walzrichtung x angeordnete Rinnen 16 gebildet, die eine gemeinsame Längskante 18 aufweisen. Diese Kante 18 kann aus fertigungs- oder lagerungstechnischen Gründen zu einem flachen oder abgerundeten Steg verbreitert sein. Der Querschnitt der in Fig. 2a dargestellten strukturierten Oberfläche 12 setzt sich aus aneinandergereihten, konkav geformten Kreisbogenstücken 14 zusammen.

Bei der in Fig. 2b gezeigten Variante eines Walzproduktes 10 sind die Kreisbogenstücke 14 konvex geformt.

Die erfindungsgemässe Ausführungsform gemäss Fig. 2c zeigt eine strukturierte Oberfläche 12, bei der die Kreisbogenstücke 14 alternierend konkav und konvex ausgeformt sind.

Es sei an dieser Stelle erwähnt, dass die drei in den Fig. 2a-c dargestellten Oberflächenstrukturen bei gleichem Kreisbogenradius r und gleicher Periodenlänge L ein identisches Reflektionsverhalten zeigen. Aus Gründen der Einfachheit weisen die in den nachfolgendne Fig. 3 bis 5 gezeigten Ausführungsvarianten von Walzprodukten 10 jeweils eine strukturierte Oberfläche entsprechend der Fig. 2a auf.

Wie in Fig. 3 gezeigt, wird parallel in einer Ebene senkrecht zur Rinnen- bzw. Walzrichtung x der strukturierten Oberfläche in einem Winkel τ aus die Oberfläche fallendes Licht 20 in den Winkelbereich θ±2α reflektiert, was zur gewünschen Verbreiterung des reflektierten Lichts 20 führt.

Bei dem in Fig. 4 dargestellten Walzprodukt 10 ist die strukturierte Oberfläche 12 mit einer die Struktur einebnenden, transparenten Lackschicht 22 mit einem optischen Brechungsindex n von beispielsweise 1,5 versehen. Auf die strukturierte Oberfläche 12 einfallendes Licht 20 wird in einem Winkelbereich von β = 2α symetrisch zur einfallenden Richtung reflektiert. Durch gewählten Brechungsindex n der Lackschicht 22 erweitert sich der Streuwinkel zu δ = 2γ.

Bei der in Fig. 5 gezeigten Ausführungsform eines Walzproduktes 10 wird eine Lackschicht 22 so aufgebracht, dass sie der darunterliegenden Oberflächenstruktur folgt, d.h. den gewünschten Kreisbogenradius r aufweist. Dadurch entsteht eine zur strukturierten Oberfläche 12 identisch geformte Oberfläche 12', jedoch ohne das durch den Walzvorgang herstellungsbedingte Rauhheitsmuster 26. Auf die Lackschicht 22 wird sodann eine reflektierende Schicht 24 aufgebracht, die wegen der fehlenden Rauheit eine weitere Verbesserung des Reflexionsverhaltens zeigt, da mit dieser Massnahme der Streulichtanteil erheblich reduziert werden kann.

Das in Fig. 6 dargestellte Walzprodukt 10 zeigt einen ähnlichen Schichtaufbau wie die Ausführungsform von Fig. 5. Zusätzlich ist hier die reflektierende Schicht 24 mit einer transparenten Schutzschicht 28 belegt, auf deren Aussenseite eine schmutzabweisende und kratzfeste transparente Schicht 30 aufgebracht ist.

Bei den Ausführungsformen gemäss Fig. 5 und 6 ist zu berücksichtigen, dass die walztechnisch strukturierte Oberfläche 12 nach dem Aufbringen der Lackschicht 22 je nach Fliessverhalten des Lackes mehr oder weniger eingeebnet wird. Die walztechnisch strukturierte Oberfläche 12 muss demzufolge so ausgebildet sein, dass die nach einer Einebnung durch die Lackschicht 22 resultierende Oberfläche 12' die gewünschte Topographie aufweist. In der Praxis bedeutet dies, dass die walztechnisch strukturierte Oberfläche im allgemeinen eine "Ausgangssteilheit" erfordert, die höher ist als die "Steilheit" der Topographie der Lackschicht 22 bzw. der darauf aufgebrachten reflektierenden Schicht 24. Die unterschiedlichen Steilheiten der walztechnisch strukturierten Oberfläche 12 und der Topographie der Lackschicht 22 mit der Oberfläche 12' sind in Fig. 6 verdeutlicht.

Bei der besonderen Ausgestaltung des Walzproduktes 10 mit einer zusätzlichen Lackschicht 22 kann bei geringer Restrauhigkeit der Ausgangsstruktur auf einen aufwendigen Glänzprozess verzichtet werden, da die Lackschicht 22 auch die Eigenschaft besitzt, diese Restrauhigkeit (nach Abzug der durch die Struktur gegebenen Welligkeit) einzuebnen.

Die in der Zeichnung dargestellten Strukturen sind stark vereinfacht wiedergegeben und können insbesondere weitere reflexionsverstärkende und/oder die Oberfläche schützende Beschichtungen aufweisen.

## Patentansprüche

1. Verwendung eines Walzproduktes aus Metall mit wenigstens einer strukturierten Oberfläche (12) mit lichtaufweitender Struktur, wobei die strukturierte Oberfläche (12) ein in Walzrichtung (x) laufendes Rinnenmuster wellenartigen Querschnitts mit einer periodischen Struktur in Form einer Aneinanderreihung von alternierend konvex und konkav geformten Kreisbogenstücken (14) mit gleichem Radius (r) und gleicher Periodenlänge (L) aufweist, der maximale Steigungswinkel (α) einer an die Kreisbogenstücke (14) angelegten Tangente (t) gegenüber einer durch die Oberfläche (12) definierten Ebene (E) 3 bis 8° beträgt, der Radius (r) der Kreisbogenstücke (14) zwischen 0,1 und 20 mm liegt und die strukturierte Oberfläche (12) eine Rauheit (Rₐ) von max. 0,1 µm aufweist zur Herstellung von Lichtreflektoren.

2. Verwendung nach Anspruch 1, **dadurch gekennzeichnet, dass** die strukturierte Oberfläche (12) eine Rauheit (Rₐ) von max. 0,05 µm, insbesondere max. 0,02 µm aufweist.

3. Verwendung nach Anspruch 1 oder 2, **dadurch gekennzeichnet, dass** der Steigungswinkel (α) 4 bis 6° beträgt.

4. Verwendung nach Anspruch 3, **dadurch gekennzeichnet, dass** die Periodenlänge (L) 0,05 bis 0,5 mm, insbesondere 0,1 bis 0,4 mm beträgt.

5. Verwendung nach einem der Ansprüche 1 bis 4, **dadurch gekennzeichnet, dass** die strukturierte Oberfläche (12) Teil eines Bleches, Bandes oder einer Folie ist.

6. Verwendung nach einem der Ansprüche 1 bis 5, **dadurch gekennzeichnet, dass** das Walzprodukt aus Aluminium oder aus einer Aluminiumlegierung besteht, wobei das Aluminiumbasismetall bevorzugt eine Reinheit von mindestens 98,3 Gew.-% aufweist.

## Claims

1. Use of a rolled metal product having at least one structured surface (12) with a light-diffusing structure, in which the structured surface (12) has a grooved pattern extending in the rolling direction (x) and having a wavy cross section with a periodic structure in the form of a series of alternately convex and concave circular-arc portions (14) with same radius (r) and same period length (L), the maximum angle of inclination (α) of a tangent (t) to the circular-arc portions (14) with respect to a plane (E) defined by the surface (12) is 3 to 8°, the radius (r) of the circular-arc portions (14) is between 0.1 and 20 mm and the structured surface (12) has a maximum roughness (Rₐ) of 0.1 µm, for the production of light reflectors.

2. Use according to claim 1, **characterized in that** the structured surface (12) has a maximum roughness (Rₐ) of 0.05 µm, in particular 0.02 µm.

3. Use according to claim 1 or 2, **characterized in that** the angle of inclination (α) is 4 to 6°.

4. Use according to claim 3, **characterized in that** the period length (L) is 0.05 to 0.5 mm, in particular 0.1 to 0.4 mm.

5. Use according to one of claims 1 to 4, **characterized in that** the structured surface (12) is part of a sheet, strip or foil.

6. Use according to one of claims 1 to 5, **characterized in that** the rolled product consists of aluminium or an aluminium alloy, the aluminium base metal preferably having a purity of at least 98.3 % by weight.

## Revendications

1. Utilisation d'un produit laminé en métal, ayant au moins une surface structurée (12) avec une structure diffusant la lumière, où la surface structurée (12) présente une configuration en sillons, allant dans la direction du laminage (x), de coupe transversale de type vague, ayant une structure périodique prenant la forme d'une juxtaposition de morceaux d'arc de cercle (14) en alternance convexe et concave avec même radius et même longueur des périodes, l'angle maximal de la pente (α) d'une tangente (t) appliquée aux morceaux d'arc de cercle (14) par rapport à un plan (E) défini par la surface (12) est de 3 à 8°, le rayon (r) des morceaux d'arc de cercle (14) se situe entre 0,1 et 20 mm et la surface structurée (12) présente une rugosité (Rₐ) d'au maximum 0,1 µm pour la fabrication de réflecteurs de lumière.

2. Utilisation selon la revendication 1, **caractérisée en ce que** la surface structurée (12) présente une rugosité (Rₐ) d'au maximum 0,05 µm, en particulier d'au maximum 0,02 µm.

3. Utilisation selon la revendication 1 ou 2, **caractérisée en ce que** l'angle de la pente (α) est de 4 à 6°.

4. Utilisation selon la revendication 3, **caractérisée en ce que** la longueur des périodes (L) est de 0,05 à 0,5 mm, en particulier de 0,1 à 0.4 mm.

5. Utilisation selon l'une des revendications 1 à 4, **caractérisée en ce que** la surface structurée (12) est une partie de tôle, de bande ou de feuille.

6. Utilisation selon l'une des revendications 1 à 5, **caractérisée en ce que** le produit laminé se compose d'aluminium ou d'un alliage d'aluminium, le métal à base d'aluminium présentant de préférence une pureté d'au moins 98,3 % en poids.
